# EUROPEAN PATENT APPLICATION

(11) **EP 2 545 995 A1**
(43) Date of publication of application: **16.01.2013**
(21) Application number: 12176100.1
(22) Date of filing: 12.07.2012
(51) Int. Cl.: B02C 4/02, B02C 21/00, B02C 23/08, B03B 9/06, B02C 19/00

(54) **Apparatus for recovering plasterboard**

(30) Priority: 14.07.2011 IT PD20110241
(71) Applicant: Euromoquettes S.r.L., 30020 San Michele al Tagliamento (VE) (IT)
(72) Inventor: Lena, Antonio Angelo, 30026 PORTOGRUARO VE (IT); Moras, Marzia, 30020 PRAMAGGIORE VE (IT); Perzolla, Ilario, 30028 SAN MICHELE AL TAGLIAMENTO VE (IT); Barboni, Luca, 30026 PORTOGRUARO VE (IT)
(74) Representative: Modiano, Micaela Nadia

(57) **Abstract**

An apparatus for recovering plasterboard, which comprises, arranged in line,
- first milling means (11) for plasterboard in panels or portions of panel,
- a group of milling units with milling rollers (12, 13) arranged in series,
- means for screening (14), brushing (15) and separating (16) the fragments that exit from said milling units arranged in series.

## Description

The present invention relates to an apparatus for recovering plasterboard.

Plasterboard is currently one of the most widely used materials in light construction work, owing to its quick application and to its particular thermal and sound insulation properties.

A plasterboard panel is generally constituted by a core made of rehydrated gypsum hemihydrate, reinforced with strong cardboard sheets which act as an external reinforcement.

Currently, due to the increasingly stringent standards on building waste disposal, together with the constant increase in the costs of waste disposal and of raw materials purchase, the need to recycle these plasterboard panels when discarded is increasingly widespread and felt.

Recycling apparatuses for plasterboard are currently known which comprise means for separating the metallic or plastic residues from the panel, means for reducing the humidity by means of a drying oven, and then means for pulverizing the panel and for separating the fragments and the plaster powder from the fragments of paper material, in order to then recover the plaster powder.

The separation of paper material and plaster provided by such an apparatus is not optimal and produces neither plaster powder nor paper residue that are ready for reuse, since neither the paper material nor the plaster are separated completely and therefore both contain percentages of the other.

Moreover, the shredding and screening that are performed are not particularly fine and the coarse separation of the two main elements inevitably entails additional treatments by the buyer of said recycled plaster and paper material, with unwanted costs and additional processing time to obtain a product that is actually reusable.

Moreover, the installation and maintenance of an adapted drying oven are very expensive, together with the fact that the drying operation often causes excessive drying, which causes both the plaster and the paper fragments to be too dry and fine and scarcely suitable to settle to be recovered.

The aim of the present invention is to provide an apparatus for recovering plasterboard that is capable of obviating the drawbacks of recycling apparatuses of the known type.

Within this aim, an object of the invention is to provide an apparatus that is capable of separating plaster and paper material, even if humid, in an optimum manner and at least the plaster in powder form substantially ready for reuse.

Another object of the invention is to provide an apparatus that is capable of processing humid material without resorting to particular and expensive drying ovens, which require a considerable expenditure of energy for their operation.

Another object of the invention is to provide an automated apparatus that is easy to manage with a very low use of labor.

Another object of the invention is to propose an apparatus for recovering plasterboard that can be manufactured with known machines and technologies.

This aim and these and other objects that will become more apparent hereinafter are achieved by an apparatus for recovering plasterboard, **characterized in that** it comprises, arranged in line,
- first milling means for plasterboard in panels or portions of panel,
- a group of milling units with milling rollers arranged in series,
- means for screening, brushing and separating the fragments that exit from said milling units arranged in series.

Further characteristics and advantages of the invention will become more apparent from the description of two preferred but not exclusive embodiments of the apparatus according to the invention, illustrated by way of non-limiting example in the accompanying drawings, wherein:

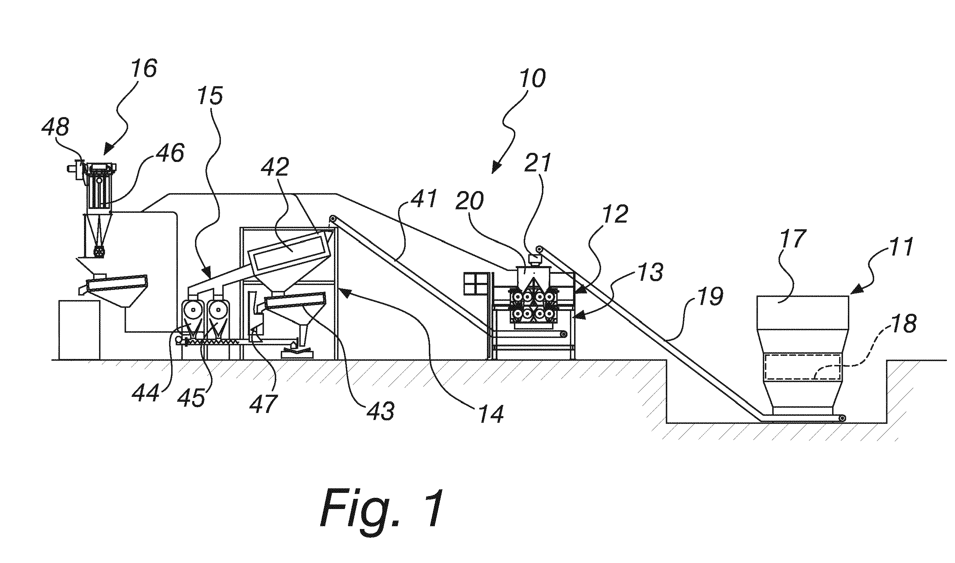

Figure 1 is a schematic view of an apparatus for recovering plasterboard according to the invention, in a first embodiment thereof;
Figure 2 is a view of a detail of the apparatus of Figure 1;
Figure 3 is a schematic view of an apparatus for recovering plasterboard according to the invention, in a second embodiment thereof;

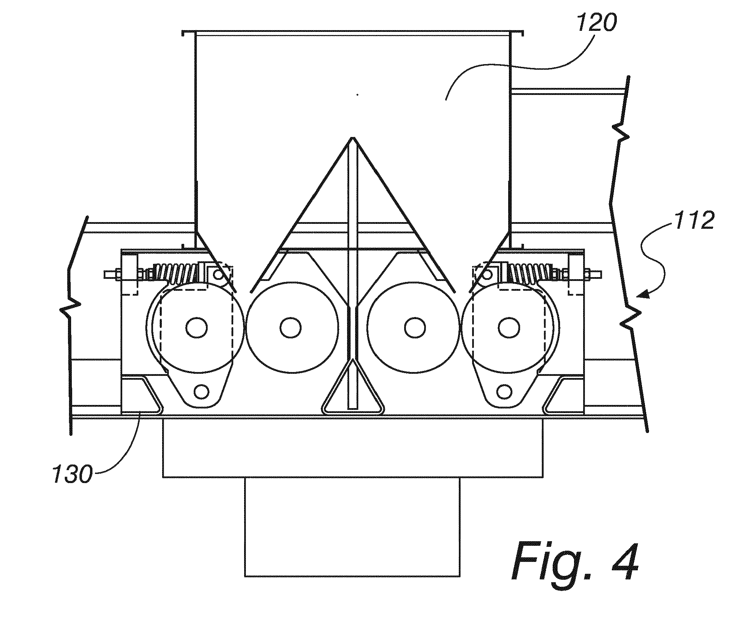

Figure 4 is a view of a detail of the apparatus of Figure 3.

With reference to the figures, an apparatus for recovering plasterboard according to the invention is generally designated by the reference numeral 10 in its first embodiment.

The apparatus 10 comprises, arranged in line,
- first milling means 11 for plasterboard in panels or portions of panel,
- a group of milling units 12 and 13 with milling rollers arranged in series,
- means for screening 14, brushing 15 and separating 16 the fragments that exit from said milling units arranged in series.

The first milling means 11 comprise a hopper 17, inside which there are rollers with blades or rotors with hammers 18, of a type known per se, which are adapted to break up the plasterboard panels into rather uniform pieces measuring approximately 20 centimeters by 20 centimeters.

Such rollers or rotors have radial teeth, or blades, which by rotating and passing each between two contiguous blades of the other roller cooperate in breaking up the pieces arranged so as to pass between the two rollers or rotors.

These rollers are actuated with a motor with a frequency variator, and the resulting pieces are subsequently conveyed by means of a conveyor belt 19 to the next group of milling units.

Such group of milling units is constituted, in this constructive example of the invention, by two milling units, respectively a first milling unit 12 and a second milling unit 13.

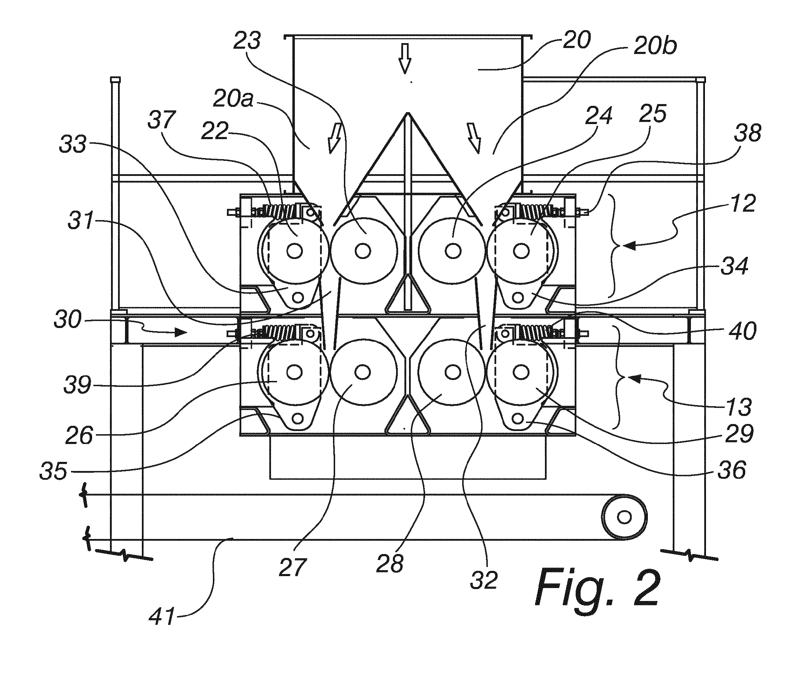

In this first embodiment of the invention, the first milling unit 12 and the second milling unit 13 are superimposed and integrated in a single supporting frame, as shown in Figure 2.

The first milling unit 12 of the group of milling units arranged in series is provided, for the introduction of the plasterboard pieces to be milled, with a vibrating hopper 20, which cooperates for the separation of the plaster powder from the pieces of paper.

Above the vibrating hopper 20 there is a permanent magnet 21, which is adapted to attract any metal fragments or dust present in the material poured and vibrated in the vibrating hopper 20.

In the present constructive example, the vibrating hopper 20 has a bottom divided into two conveyance channels 20a and 20b, so that the vibrating hopper feeds two pairs of rollers.

Each milling unit 12, 13 in fact comprises two side-by-side pairs of rollers, respectively rollers 22, 23, 24, 25 for the first milling unit 12 and rollers 26, 27, 28, 29 for the underlying second milling unit 13.

The milling distance, i.e., the axial distance between the surfaces of the two opposite rollers, between the rollers 22, 23 and 24, 25 of a first milling unit 12 is greater than the milling distance between the rollers 26, 27 and 28, 29 of the subsequent second milling unit 13, so that the reduction of the size of the plasterboard fragments is progressive.

For each pair of rollers, a first roller rotates clockwise, rollers 22, 24, 26, 28 in the figures, while the other roller rotates counterclockwise, rollers 23, 25, 27, 29 in the figures; it should be understood that the rollers can also rotate in the opposite direction with respect to what has been indicated by way of example.

For each pair of rollers, turned by motorized means, not described for the sake of simplicity since they are to be understood as being of a known type, one roller rotates faster than the other one, with a preferable speed ratio of 1:1.25.

In this manner, the plasterboard is not only compressed, in passing between the rollers, but it is also flaked, i.e., a sort of scraping of the plaster from the paper to which it is attached occurs.

An intermediate hopper, respectively 31 and 32, is associated with each pair of upper rollers 22, 23 and 24, 25 and is adapted to convey the milled and flaked material between the rollers of the underlying pair of rollers 26, 27 and 28, 29.

For each pair of milling rollers, one roller 22, 25, 26, 29 is supported by floating flanges 33, 34, 35, 36, which are adapted to allow the temporary spacing of the two rollers of each pair so as to avoid jamming situations that might be caused by pieces of excessive size with respect to the milling distance between such rollers.

In the present constructive example, each flange is pivoted below the roller that is pivoted thereto, while in an upper region it is engaged with a pusher device, for example a shock absorber with a helical spring 37, 38, 39,40.

The shock absorber thus pushes the flange to rotate so that the floating roller moves toward the other opposite fixed roller and so that upon the passage of a body that is excessively large or cannot be milled the floating roller retracts instantly due to the temporary compression of the helical spring.

At the output of the superimposed milling units 12 and 13, pieces of paper measuring approximately 10-15 centimeters by 10-15 centimeters, with plaster in powder or granules attached thereto, together with already-pulverized or partially pulverized plaster and paper fragments, fall onto an underlying conveyor belt 41.

The conveyor belt 41 conveys such material to the screening means 14.

The screening means 14 comprise a first rotating drum 42, which is inclined and has a perforation measuring approximately 5 cm in diameter or a rectangular perforation and from which pieces of paper larger than the holes of the rotating drum exit, being retained by the screen, and dust and fragments of plaster and paper exit from the holes of the drum, falling into a second rotating drum 43 whose side wall has smaller holes, for example holes with a diameter from 0.4 to 0.6 centimeters.

The brushing means 15, to which the pieces of paper that exit from said first rotating drum 42 are sent, comprise two brushing units in parallel 44, 45, with a controlled rotation rate, adapted to remove from the paper the plaster that is still attached thereto.

The separation means 16 comprise
- a cyclone separator settling filter 46, which is adapted to aspirate the paper that exits from the brushing machines 44, 45 to send it to a pressing container,
- and a settling aspirator 47, of the pneumatic sifter type, for removing fine dust, adapted to aspirate the waste paper that exits from said second rotary screening drum 43 and separate it from the plaster of fine particle size, such waste paper being conveyed to said cyclone separator settling filter 46.

The cyclone filter 46 is also intended to aspirate with settling the dust that is generated in the milling units 12 and 13, in the rotating drums 42 and 43 and in the brushing units 44 and 45.

Pure plaster of fine particle size exits from the brushing units 44, 45, from the holes of the second rotating drum 43, and from the settling aspirator 47.

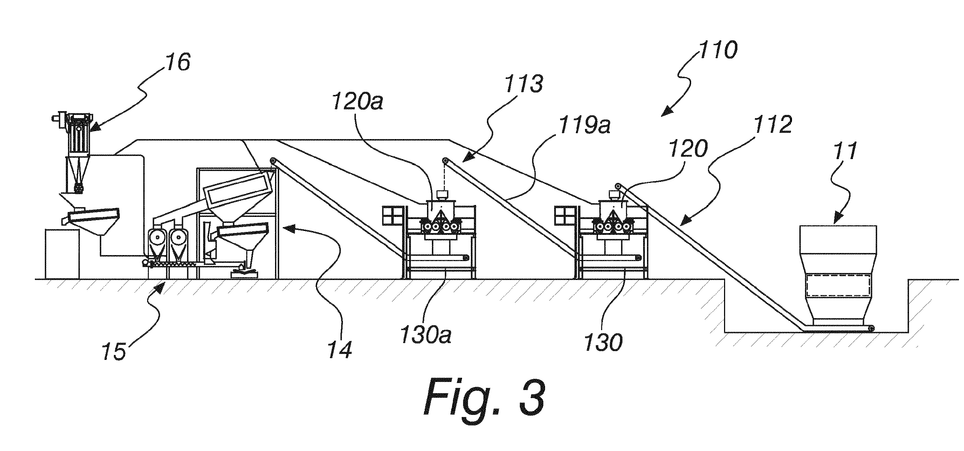

Figure 3 illustrates schematically an apparatus according to the invention in a second equivalent embodiment thereof, designated by the reference numeral 110 therein.

The apparatus 110 is **characterized in that** the first milling unit 112 and the second milling unit 113, instead of being superimposed, are arranged in series side-by-side, each supported by a corresponding frame 130 and 130a, each provided with a respective vibrating hopper 120, 120a.

Between two successive milling units 112, 113 a conveyor belt 119a is interposed, which is adapted to receive the material processed by the first milling unit 112 to introduce it into the subsequent second milling unit 113.

The rest of the apparatus 110 is the same as described above for the first embodiment of the improved apparatus, designated by the reference numeral 10.

In practice it has been found that the invention achieves the intended aim and objects.

In particular, the invention provides an apparatus that is capable of separating plaster and paper material in an optimum manner and at least the plaster in powder form substantially ready for reuse; this is made possible by the two milling units in series and by the brushing unit, which further processes the particles of paper material that might still bear plaster.

Moreover, the invention has provided an apparatus that is capable of processing damp plasterboard, the humidity cooperating in avoiding the dispersal of the plaster dust that is generated in all the steps of the process.

Moreover, the compression with flaking of the material between the rollers allows a sufficient dehumidification, or drying, of the material itself, without the need to resort to dedicated drying ovens, with important energy savings.

The machines used can be taken from the cereal sector, adopting machines for milling and pulverizing cereals and the like.

Moreover, the invention provides an automated apparatus that is easy to manage with very little use of labor.

Moreover, the invention proposes an apparatus for recovering plasterboard that can be manufactured with known machines and technologies.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2011A000241 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for recovering plasterboard, **characterized in that** it comprises, arranged in line,
- first milling means (11) for plasterboard in panels or portions of panel,
- a group of milling units with milling rollers (12, 13) arranged in series,
- means for screening (14), brushing (15) and separating (16) the fragments that exit from said milling units arranged in series.

2. The apparatus according to claim 1, **characterized in that** said first milling means (11) comprise a hopper (17) inside which there are rollers with blades (18) adapted to break up the plasterboard panels.

3. The apparatus according to the preceding claims, **characterized in that** at least the first milling unit (12) of the group of milling units arranged in series is provided, for the introduction of the plasterboard pieces to be milled, with a vibrating hopper (20).

4. The apparatus according to the preceding claim, **characterized in that** above said vibrating hopper (20) there is a permanent magnet (21) which is adapted to attract any metal fragments or dust present among the material poured into the vibrating hopper (20).

5. The apparatus according to the preceding claims, **characterized in that** each milling unit (12, 13) comprises two laterally adjacent pairs of rollers (22, 23, 24, 25, 26, 27, 28, 29), the milling distance between the rollers (22, 23, 24, 25) of a first milling unit (12) being greater than the milling distance between the rollers (26, 27, 28, 29) of the subsequent second milling unit (13).

6. The apparatus according to the preceding claims, **characterized in that** said first milling unit (12) and said second milling unit (13) are superimposed and integrated in a single supporting frame (30), an intermediate hopper (31, 32) being associated with each pair of upper rollers (22, 23, 24, 25) and being adapted to convey the milled and flaked material between the rollers of the underlying pair of rollers (26, 27, 28, 29).

7. The apparatus according to the preceding claims, **characterized in that** for each pair of milling rollers (22, 23, 24, 25, 26, 27, 28, 29), one roller (22, 25, 26, 29) is supported by floating flanges (33, 34, 35, 36) which are adapted to allow the temporary spacing of the two rollers so as to avoid jamming situations caused by pieces of excessive size with respect to the milling distance between said rollers.

8. The apparatus according to the preceding claims, **characterized in that** said screening means (14) comprise a first rotating drum (42), which is inclined and from which pieces of paper that are larger than the holes of the rotating drum exit, being retained by the screen, and dust and fragments of plaster and paper exit from the holes of the drum, falling into a second rotating drum (43) whose side wall has smaller holes.

9. The apparatus according to the preceding claims, **characterized in that** said brushing means (15), to which the pieces of paper that exit from said rotating drum (42) are sent, comprise at least one brushing unit (44, 45), which is adapted to remove from the paper the plaster that is still attached thereto.

10. The apparatus according to the preceding claims, **characterized in that** said separation means (16) comprise
- a cyclone separator settling filter (46), which is adapted to aspirate the paper that exits from the at least one brushing unit (44, 45) to send it to a pressing container,
- a settling aspirator (47), which is adapted to aspirate the waste paper that exits from said second rotary screening drum (43) and separate it from the plaster of fine particle size, said waste paper being conveyed to said cyclone separator settling filter (46).

11. The apparatus according to the preceding claims, **characterized in that** pure plaster of fine particle size exits from said at least one brushing unit (44, 45), from the holes of said second rotating drum (43), and from the settling aspirator (47).

12. The apparatus according to claims 1 to 5 and 7 to 11, **characterized in that** said first milling unit (112) and said second milling unit (113) are arranged in series side-by-side, each supported by a corresponding frame (130, 130a), each provided with a respective vibrating hopper (120, 120a), where between two successive milling units (112, 113) a conveyor belt (119a) is interposed which is adapted to receive the material processed by the first milling unit (112) to introduce it into the subsequent second milling unit (113).
